# EUROPEAN PATENT APPLICATION

(11) **EP 2 469 467 A1**
(43) Date of publication of application: **27.06.2012**
(21) Application number: 10306498.6
(22) Date of filing: 23.12.2010
(51) Int. Cl.: G06T 7/00, H04N 5/232, H04N 7/18

(54) **An integrated method for camera planning and positioning**

(71) Applicant: Alcatel Lucent, 75007 Paris (FR)
(72) Inventor: Follesa, Gianluca, 9100 Sint-Niklaas (BE); Giordano, Vincenzo, 2800 Mechelen (BE)
(74) Representative: Steeghs, Peter

(57) **Abstract**

The present invention relates to a method, a related system and related devices for calibrating a position of a Camera for monitoring a predetermined area. The camera being coupled to a remote server over a communications link where the remote server is able to receive media corresponding to the predetermined area to be monitored within an environment of the camera. This media is recorded by the camera and forwarded to the remote server over the communications link. The method further comprises the step the remote server forwarding the media corresponding to the predetermined area towards a camera positioning device where the media includes a plurality of real reference markers in the predetermined area. The actual location relative to an image-framing of the camera of each real reference marker of the plurality of real reference markers is recognizing in the media forwarded. Subsequently, camera position calibration instructions are determined based on the difference between a predefined location, relative to an image-framing of the camera, of each screen marker of a plurality of screen markers where the predefined screen markers define the predetermined area to be monitored and the actual location relative to an image-framing of the camera of each corresponding real reference marker of the plurality of real reference markers as determined by a camera positioning device.

## Description

The present invention relates to a method for calibrating a position of a Camera according to the preamble of claim 1, a system for calibrating a position of a Camera according to the preamble of claim 3.

Such a method for calibrating a position of a Camera being well known in the art where such a method relates to the calibrating of a position of a Camera for monitoring a predetermined area in the surrounding/environment of the camera. Such camera typically is coupled to a remote server, for managing a plurality of such cameras over a communications link. The remote server is able to receive media corresponding to the predetermined area to be monitored within said surrounding/ environment of the camera, where this media is recorded by the camera and forwarded subsequently to the remote server over a communications link. The media received at the remote server may be displayed and inspected, together with media of a plurality of other cameras each monitoring a different area, at the site of the remote server.

When "Monitoring planning", "Installation & commissioning" and "Operation" phases are run by different entities, tools and processes, there is a significant risk of generating data mismatch and inefficiencies. Moreover additional inefficiencies are generated whenever camera installation is performed by different engineers depending on the type of activity; in a typical case is a cabling engineer does pull cables up to the desired location and terminates the cable (which typically supports Ethernet), an installation engineer installs the camera on the defined support and finally a configuration engineer needs to configure the camera, the network connections, positions the camera in the right direction and fastens the camera in order to have a predetermined view fully covering a predetermined area to be monitored as determined in an area monitoring plan.

This installation and calibration task could be combined in one profile, anyhow by doing so there would be a need to send highly skilled engineers and thus increase the overall implementation cost.

Furthermore, apart from the labour intensive approach, this installation approach is very error prone. Usually a large number of cameras are applied for monitoring a full area to be monitored in such an area monitoring plan where each camera monitors a predefined part of the full area to be monitored, but wherein not the intended predetermined area to be monitored is not always covered by a camera. Hence there is overlap in area monitored by all of the cameras and/or parts of the full area to be monitored that are not covered by a camera. Alternatively, even a wrong camera is addressed.

An **objective** of the present invention is to provide a method, system and related devices of the above known type but wherein the calibrating of a position of a Camera is performed in more efficient and less error prone manner.

According to the present invention, this objective is achieved by the method as described in claim 1, the system as described in claim 3, the related camera positioning device as described in claim 5, the related remote server as described in claim 7 and the related camera positioning application as described in claim 10.

Indeed, by first forwarding, from the remote server towards a camera positioning device CPD, the media recorded by the camera CAM, where this media corresponds to the predetermined area to be monitored, and which media includes a plurality of real reference markers which are positioned in the predetermined area to be monitored and which are included in the media by means of recording the environment to be monitored, subsequently recognizing in the forwarded media, the actual location relative to an image-framing of said camera of each real marker of a plurality of real markers and then determining camera position calibration instructions based on a difference between a location, relative to an image-framing of said camera, of each predefined screen marker of a plurality of predefined screen markers, where the predefined screen markers define the predetermined area to be monitored and said actual location relative to an image-framing of said camera of each corresponding real marker of said plurality of real markers as determined by a camera positioning device.

The camera position calibration instructions generated are intended to help a technician position the camera in the right way where the technician using the generated instructions in an iterative way should decrease the difference between each real marker and a corresponding screen marker in order to finally match each real marker with a corresponding screen marker of the plurality of real markers and the plurality of screen markers.

The generated instructions require a technician to adapt at least one of the compass angle, the tilt and zoom of the lens in order to correctly position the camera so that the camera indeed covers the predefined area to be monitored.

Such media may include discrete images or video.

Such an actual location relative to an image-framing of the camera is the location of a point in the media recorded where this location is determined based on the image framing of the camera, e.g. the x,y locations relative to a corner of the image framing of the camera.

In the present invention at least one reference marker is positioned at a predetermined location within the area to be monitored. As this area to be monitored is recorded by the camera, each reference marker is included in the media as recorded, as a real reference marker. The location of such a Real reference marker is the location of the reference marker in the media at a certain location relative to the image framing of the camera.

Another characterizing embodiment of the present invention is described in claim 2 and claim 4 and claim 6

Advantageously, by applying a coupling of the unique identification of the camera and the geographical location identifier can be used to uniquely identify the camera, preventing from the situation that media recorded at the camera and monitored by an operator the location is unknown or wrongly identified. Such coupling can be maintained in a storage device.

Such unique camera identifier may be a communication address like MAC-address or any other unique identifier like a serial number of the camera or another unique code preinstalled on the camera accessible through the Ethernet link and reported also on a label attached on the camera, label readable with barcode reader or even RFID could be applied.

The geographical location identifier could be the GPS location of the camera or the location determined by localization means of the mobile communications network the camera positioning device is connected to or otherwise.

By initially coupling a camera communications address like a MAC address or an IP address with a geographical location identifier the camera and its position can be identified uniquely when monitoring the media provide by a camera and furthermore any camera can be addressed uniquely using this coupling in case of installation or any maintenance activity.

Further characterizing embodiments of the present integrated method for Camera planning and positioning are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents the system for calibrating a position of a Camera CAM for monitoring a predetermined area including a camera CAM and a remote server RS and a camera positioning device CPD,
Fig. 2 represents a functional representation of the system for calibrating a position of a Camera CAM including the functional representation of the camera positioning device CPD and a functional representation of the remote server RS as presented in Fig.1.

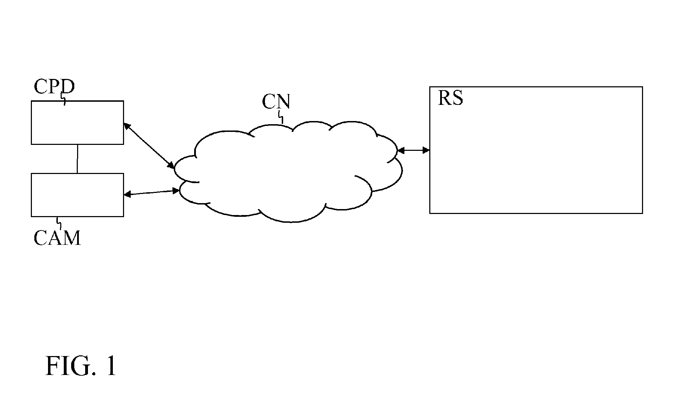

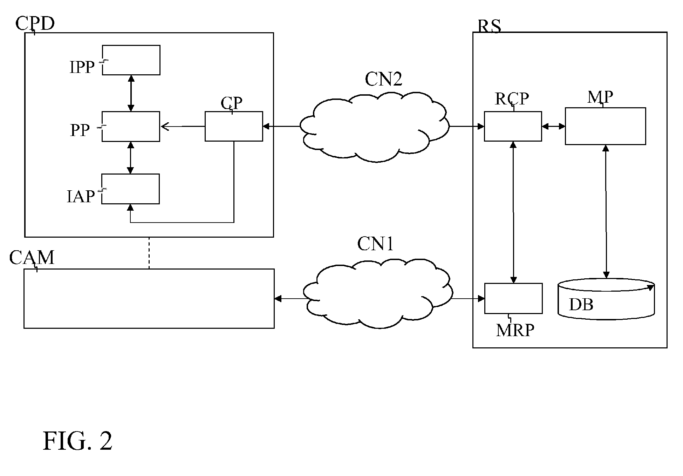

In the following paragraphs, referring to the drawing in FIG.1 and Fig. 2 an implementation of the system is described. In the second paragraph, all connections between mentioned elements are defined.

Subsequently all relevant functional means of the mentioned system as presented in FIG.2 are described followed by a description of all interconnections. In the succeeding paragraph the actual execution of the communication system is described.

A first essential element of system for calibrating a position of a Camera CAM for monitoring a predetermined area is a camera CAM, e.g. being a surveillance camera for monitoring an area in a certain city where the media recorded by the camera is being watched by an operator at a remote location. The operator, in addition may also monitor media recorded by a plurality of further surveillance cameras monitoring further other relevant parts of the city.

Such surveillance camera may be mounted on wall a pole or otherwise being able to oversee the predetermined area to be monitored.

Although such a system for monitoring such an area usually comprises a plurality of surveillance cameras, for sake of clarity and simplicity only one such surveillance camera CAM is described in this embodiment.

A second relevant element is a remote server RS that is adapted to receive media corresponding to the predetermined area to be monitored within an environment of the camera CAM where this media is being recorded by the camera CAM and forwarded to the remote server RS over a communications link.

Furthermore, there is a Camera Positioning device CPD for assisting a technician in installing and properly positioning such camera. Such camera positioning device may be a Smartphone having a screen and speaker or presenting the camera positioning instructions to a user of the camera positioning device CPD. The camera positioning device CPD further may include a sensor for determining the GPS location of the device.

The Camera Positioning device CPD is associated in such way that all measurements done with this Camera Positioning device CPD so that these are the same for the camera CAM. The Camera Positioning device CPD can e.g. be mounted on the camera with a mold.

Both the camera CAM and the camera Positioning Device CPD are coupled to the remote server RS over a communications link CN1. The coupling between the camera and the remote server may be an internet connection where the camera is identified by a MAC address and an IP address. The coupling between the camera positioning device and the remote server RS may be supported by a mobile data connection such as UMTS or any other mobile data network CN2.

The Camera Positioning device CPD comprises a Communications part CP that is
adapted to obtain a predefined location relative to an image-framing of said camera, of each screen marker of a plurality of screen markers where these predefined screen markers define the predetermined area to be monitored. The Communications part CP is further adapted to receive the media recorded by the camera and forwarded by the remote server RS. The Camera Positioning device CPD in addition comprises an Image analyzing part IAP that is adapted to determine in the media forwarded, the actual location relative to an image-framing of the camera of each real reference marker of the plurality of real reference markers. The Camera Positioning device CPD further comprises a Processing Part PP that is able to determine camera position calibration instructions based on a difference between a predefined location relative to an image-framing of said camera, of each screen marker of a plurality of screen markers, said predefined screen markers defining said predetermined area to be monitored and the actual location relative to an image-framing of said camera of each corresponding real reference marker of the plurality of real reference markers (as determined by a camera positioning device). Furthermore the Camera Positioning device CPD, i.e. the Smartphone comprises an Instruction presenting part IPP that is able to present the camera position calibration/adjusting instructions to a user, i.e. a technician positioning the camera, of the Camera Positioning device CPD.

Such an Instruction presenting part IPP may be able to display the instructions on the screen using pictorials, written instructions or a combination thereof. Alternatively the Instruction presenting part IPP may be a speaker of the smart phone for providing the user with spoken instruction solely or in addition to the instructions presented at the screen of the smart phone.

The communications part CP of the Camera Positioning device CPD, i.e. the smart phone is further adapted to provide the remote server at least with a location identifier of the camera CAM.

The location identifier may be the GPS location or the location of the camera determined based on the mobile communications network of the smart phone CPD.

The Remote Server RS first comprises a media reception part MRP that is able to receive the media recorded by the camera CAM and further comprises a communications part RCP that is able to forward the media recorded by the camera and received at the remote server RS towards the camera positioning device CPD. The communications part RCP further is adapted to communicate with the camera positioning device CPD i.e. the smart phone and a management part MP that is adapted to manage the predefined camera position parameters stored for the camera CAM in a data storage device DB. The data storage device may be internal or external to the remote server RS.

The remote server RS further comprises a management part MP that is adapted to manage the maintaining for the camera CAM of the predefined location relative to an image-framing of said camera, of each screen marker of a plurality of screen markers for said camera CAM in an entry of the data storage device DB dedicated to the camera CAM.

The Remote Server RS further is adapted to store a camera communications address with a geographical location identifier of the camera, obtained from the camera positioning device, together with the predefined camera position parameters in an entry of the data storage device DB dedicated to the camera CAM

The Communications part CP has an input/output-terminal that is at the same time an input-output-terminal of the Camera Positioning device CPD. The Communications part CP further is coupled to the Processing Part PP that in turn is coupled to the Instruction resenting part IPP. The Image analyzing part IAP further is coupled with a first output to an input of the Processing part and with an input to an output of the communications part.

The Communications part RCP of the remote server RS has an input/output-terminal that is at the same time an input-output-terminal of the remote server RS. The Communications part RCP further is coupled to the management part MP that in turn is coupled to the data storage device DB that may be internal or external to the remote server RS.

The media reception part MRP further has an input-terminal that is at the same time an input-terminal of the Camera Positioning device CPD and the media reception part MRP further is coupled with an output to an input of the communication part CP.

In order to explain the execution of the present invention it is assumed that a surveillance camera needs to be installed at a certain location. In a initial planning phase the area to be monitored in a city map, landmark or private domain, defining the position of a camera, its video beam (direction or compass, tilt, zoom information) and attributes plus the capability to rollout data needed to efficiently configure and calibrate camera's are defined. This typically is done for the entire area to be monitored e.g. the city map wherefore a plurality of camera's are planned to cover the whole area to be monitored. For each camera the belonging position of the camera, its video beam (direction or compass, tilt, zoom information) and attributes plus capability to rollout data needed to efficiently configure and calibrate each camera are defined during planning phase.

Subsequently, a camera needs to be placed at the predefined location in such way that the, in the camera coverage planning predefined area is covered indeed.

It is assumed that the cabling for connecting the camera to the remote server is available already. The technician on location for installing this camera mounts the camera at the planned location directing at the predefined area to be monitored.

At a certain moment the data storage device DB is populated with the planning data of the camera, i.e. the data for each camera defining the position and direction of the camera as defined in a planning phase wherein the coverage of an entire area e.g. the city is planned by applying a plurality of cameras where each camera monitors a predefined area of the whole city. For each camera the belonging position of the camera, its video beam (direction or compass, tilt, zoom information were defined and stored in the data storage device DB. This storing of this data is performed via the management part MP of the remote server.

The meant camera first is connected and configured in the following way: First when the camera is connect to the remote server over a IP network, a Dynamic Host configuration Protocol module further referred to as a DHCP module, will detect the presence of a camera, query a MAC address and upon detection of a MAC address of the camera (being the unique identifier of the camera), the remote server, by means of the DHCP module it, will assign an Internet protocol Address, further referred to as an IP address, will query the camera for further information such as Camera Model, Manufacturer, optics mounted, technical parameters of the camera, version software installed on the camera etc.. and will store this information together with the link between IP and MAC address in the data storage device DB in a dedicated entry for this camera. The camera then is connected to the remote server and is known to the remote server.

Subsequently, the operator scans the MAC address indicated at the camera (using bar code and/or alphanumerical characters, and/or RFID) or manually enters the indicated MAC address, where the MAC address is the unique identification of the camera using the Smartphone. The Smartphone will send to the server, the Identification of the camera, being the MAC address, the real GPS position. Advantageously this coupling of the unique identification of the camera and the location identifier being the GPS location can be used to uniquely identify the camera, preventing from the situation that media recorded at the camera and monitored by an operator the location is unknown or wrongly identified.

Although in this embodiment a MAC address is described any other unique identifier like the MAC address, the serial number of the camera or another unique code preinstalled on the camera accessible through the Ethernet link and reported also on a label attached on the camera, label readable with barcode reader or even RFID could be applied.

Now the server can built the complete information. The camera is installed, linked to the network and all camera data are stored on the data storage device DB.

When the camera is registered at the remote server RS, the Remote Server RS by means of the media reception part MRP receives media recorded by the camera CAM. This recorded media then by means of the communications part RCP of the remote server RS is forwarded towards the camera positioning device CPD. The forwarded media is presented at a screen of the camera positioning device CPD. In this way the technician initially is supported in roughly positioning and directing the camera at the area to be monitored.

Subsequently, the technician will use the first set of data (the position on map) to allocate a real reference marker e.g. being an infrared lamp for each point of interest that was previously marked in the planning phase. His data is retrieved from the data storage device DB. It is assumed two real reference markers were planned on the map and subsequently placed within the area to be monitored at the planned spot. Both real reference markers then are recorded too and included in the media recorded by the camera.

The technician starts positioning the camera in the right way in order to cover the full area to be monitored and applies here for an application that deals with recognizing in the media forwarded, the actual location relative to the image-framing of the camera of each real reference marker of the plurality of real reference markers. This recognizing is applied using image recognition. In this way the actual location on the screen of both real reference markers is determined.

In addition, the Communications part CP has retrieved a predefined location relative to an image-framing of the camera, for each of each screen marker, in this embodiment 2 screen markers where the predefined screen markers defining said predetermined area to be monitored .....

The processing Part PP, subsequently determines camera position calibration instructions by determining the difference between a predefined location, of each of the two screen markers where these predefined screen markers define the predetermined area to be monitored and the actual location each corresponding real reference marker of the two of real reference markers ( as determined by a camera positioning device).

Based on the differences between each of the corresponding parameters an instruction for the technician is generated indicating the technician with a following action. These following actions could be one or more of: change the compass angle, change the tilt of the camera, adapt the zooming, adjust focus.

Afterwards this process is repeated until each these predefined screen markers on the screen of the Smartphone CPD matches substantially with the corresponding real reference marker parameters. Hence the positioning is done by calibrating orientation, tilt and zooming getting adjusted until both targets on screen (i.e. infrared lamps, are matched. Focus gets adjusted last by smart image recognition performed on the camera real time view.

It is to be noted that although the present invention is described in as client-server where the camera positioning device cooperates with the server for obtaining data with respect to the predefined area to be monitored, alternatively this data could be loaded immediately into the camera positioning device so that this device is able to position the camera on its own as standalone device where the data is obtained over a short range communications link like USB, Bluetooth or WIFI or even being entered manually.

The recorded media still is to be forwarded to the camera positioning device directly over a further short range wired or wireless interface.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for calibrating a position of a Camera (CAM) for monitoring a predetermined area, said camera (CAM) being coupled to a remote server (RS) over a communications link, said remote server (RS) receiving media corresponding to said predetermined area to be monitored within an environment of said camera (CAM), being recorded by said camera (CAM) and forwarded to said remote server (RS) over said communications link, **CHARACTERIZED IN THAT** said method comprises the step of:
a. said remote server forwarding said media corresponding to said predetermined area towards a camera positioning device CPD, said media including a plurality of real reference markers in said predetermined area; and
b. Recognizing in said media forwarded, the actual location relative to an image-framing of said camera of each real reference marker of said plurality of real reference markers; and
c. Determining camera position calibration instructions based on the difference between a predefined location, relative to an image-framing of said camera, of each screen marker of a plurality of screen markers, said predefined screen markers defining said predetermined area to be monitored and said actual location relative to an image-framing of said camera of each corresponding real reference marker of said plurality of real reference markers..

2. A method for calibrating a position of a Camera according to claim 1, **CHARACTERIZED IN THAT** said method further includes the step of coupling a unique camera identifier with a geographical location identifier of said camera.

3. A system for calibrating a position of a Camera (CAM) for monitoring a predetermined area, said system comprising said camera (CAM) and a remote server (RS), said camera (CAM) being coupled to said remote server (RS) over a communications link, said remote server (RS) being adapted to receive media corresponding to said predetermined area to be monitored within an environment of said camera (CAM), being recorded by said camera (CAM) and forwarded to said remote server (RS) over said communications link, **CHARACTERIZED IN THAT** said remote server RS is further adapted to forward said media corresponding to said predetermined area towards a camera positioning device CPD, said media including a plurality of real reference markers in said predetermined area; and said system further comprises:
a. an image analyzing part (IAP), adapted to recognize in said media forwarded, the actual location relative to an image-framing of said camera of each real reference marker of said plurality of real reference markers; and
b. a processing part (PP), adapted to determine camera position calibration instructions based on the difference between a predefined location, relative to an image-framing of said camera, of each screen marker of a plurality of screen markers, said predefined screen markers defining said predetermined area to be monitored and said actual location relative to an image-framing of said camera of each corresponding real reference marker of said plurality of real reference markers (as determined by a camera positioning device).

4. A system for calibrating a position of a Camera (CAM) according to claim 4, **CHARACTERIZED IN THAT** said system further includes localization part (LP) adapted to couple a unique camera identifier with a geographical location identifier of said camera.

5. Camera Positioning device (CPD) for use in a system according to claim 3, **CHARACTERIZED IN THAT** said camera positioning device (CPD) comprises;
a. a Communications part (CP), adapted to obtain predefined location relative to an image-framing of said camera, of each screen marker of a plurality of screen markers, said predefined screen markers defining said predetermined area to be monitored; and
b. an Image analyzing part (IAP), adapted to determining in said media forwarded, the actual location relative to an image-framing of said camera of each real reference marker of said plurality of real reference markers; and
c. a Processing Part (PP), adapted to determine camera position calibration instructions based on a difference between a predefined location relative to an image-framing of said camera, of each screen marker of a plurality of screen markers, said predefined screen markers defining said predetermined area to be monitored and said actual location relative to an image-framing of said camera of each corresponding real reference marker of said plurality of real reference markers ( as determined by a camera positioning device); and
d. an Instruction presenting part (IPP), adapted to present said camera position calibration/adjusting instructions to a user of said Camera Positioning device (CPD).

6. Camera positioning device (CPD) according to claim 5, **CHARACTERIZED IN THAT** said communications part (CP) is further adapted to provide said remote server at least with a geographical location identifier of said camera (CAM).

7. Remote Server (RS) for use in system according to claim 3, **CHARACTERIZED IN THAT** said remote server (RS) comprises a communications part (RCP), adapted to forward said media received towards said camera positioning device (CPD).

8. Remote Server (RS) according to claim 7, **CHARACTERIZED IN THAT** said remote server (RS) further comprises a management part (MP), adapted to manage the maintaining for said camera (CAM), said predefined location relative to an image-framing of said camera, of each screen marker of a plurality of screen markers for said camera (CAM) in an entry for said camera (CAM) of said data storage device (DB).

9. Remote Server (RS) according to claim 8, **CHARACTERIZED IN THAT** said management part (MP) further is adapted to store a unique camera identifier with a geographical location identifier of said camera together with said predefined camera position parameters in said in said entry for said camera (CAM) of said data storage device (DB).

10. Camera Positioning application for use in a system according to claim 3, **CHARACTERIZED IN THAT** said Camera Positioning application comprises;
a. a Communications part (CP), adapted to obtain predefined location relative to an image-framing of said camera, of each screen marker of a plurality of screen markers, said predefined screen markers defining said predetermined area to be monitored; and
b. an Image analyzing part (IAP), adapted to determining in said media forwarded, the actual location relative to an image-framing of said camera of each real reference marker of said plurality of real reference markers; and
c. a Processing Part (PP), adapted to determine camera position calibration instructions based on a difference between a predefined location relative to an image-framing of said camera, of each screen marker of a plurality of screen markers, said predefined screen markers defining said predetermined area to be monitored and said actual location relative to an image-framing of said camera of each corresponding real reference marker of said plurality of real reference markers ( as determined by a camera positioning device).
